# EUROPEAN PATENT APPLICATION

(11) **EP 3 751 651 A1**
(43) Date of publication of application: **16.12.2020**
(21) Application number: 19862491.8
(22) Date of filing: 17.04.2019
(51) Int. Cl.: H01M 8/04089, H01M 8/04223

(54) **FUEL CELL SYSTEM AND PURGING AND DRAINING METHOD DURING SHUTDOWN/STARTUP OF SAID SYSTEM**

(30) Priority: 18.09.2018 CN 201811089463
(71) Applicant: Shanghai Everpower Technologies Ltd., Shanghai 201206 (CN)
(72) Inventor: GAO, Yong, Shanghai 201206 (CN); JANUSZ, Blaszczyk, Shanghai 201203 (CN)
(74) Representative: Richly & Ritschel Patentanwälte PartG mbB
(86) International application number: PCT/CN2019/082998
(87) International publication number: WO 2020/057116

(57) **Abstract**

The present disclosure relates to a fuel cell system and a method for purge and removing water during its stop and start process, including a fuel cell stack (1), an air compressor (2), an air inlet tube (3), and an air outlet tube (4), while the hydrogen supply system includes a hydrogen storage tank, a hydrogen inlet tube (5), and a hydrogen outlet tube, the air outlet tube (4) is connected to a low-oxygen, gas storage tank (7) through a manifold (6), and the low-oxygen gas storage tank (7) is connected back to the hydrogen inlet tube (5) through a circulating tube (8), after stop, the fuel cell continues to generate power, hydrogen remaining at the anode side of the fuel cell stack (1) consumes oxygen in air at the cathode side, and low-oxygen gas so generated is used to purge hydrogen remaining at the anode side of the fuel cell stack, and to purge oxygen-containing gas at the anode side during start, thus improving safety, which can also evacuate water in fluid channel at the anode side safely and efficiently during stop.

## Description

### BACKGROUND OF THE INVENTION

### 1. Technical Field

The present invention relates to fuel cells, and more particularly to a fuel cell system and a method for purge and removing water during its start and stop process.

### 2. Description of Related Art

A fuel cell is a device that generates power by directly converting chemical energy of fuel into electric energy. The operational principle it relies on is to convert chemical energy in a substance provided externally into electric energy through an electrochemical reaction. With continuous supply of fuel and an oxidizing agent, a fuel cell can continuously output electric power and thermal energy. In short, a fuel cell is an energy conversion device.

A proton exchange membrane fuel cell is an electrochemical power-generating device using hydrogen as its fuel and using oxygen as its oxidizing agent. In use, hydrogen and air are introduced to its anode and cathode, respectively. The gases react with the presence of a catalyst to produce water as well as large heat. With its advantages of being environmentally friendly, having good energy-converting efficiency, and providing adjustability in power, fuel cells are considered as one of the cleanest and most efficient new-energy-based power generating devices, and have been extensively used in automobiles.

When a fuel cell is stopped, and the supply of the fuel gas and the oxidizing gas is cut off, there can be residuals of the fuel gas and the oxidizing gas remaining in the fuel channel and the oxidizing agent channel in the stack. Thus, stop of a fuel cell is relatively time-consuming. Particularly, the remaining fuel gas and oxidizing gas tend to pass through the electrolyte membrane and damage electrodes and catalyst supports, leading to reduced service life of the fuel cell. In addition, the fuel gas is generally hydrogen that is flammable and explosive, so the hydrogen remaining in the cell stack after stop of the fuel cell can cause safety incidents such as fire and explosions. To prevent this, after stop, a cell stack has to be purged. A conventional approach to purge is to purge the stopped cell stack with high-purity nitrogen. However, such a practice causes waste of energy and requires additional costs for N₂.

### SUMMARY OF THE INVENTION

The objective of the present invention is to address the foregoing shortcomings of the prior art by providing an energy-saving, safe, long life fuel cell system and a method for purge and removing water during its start and stop process.

The objective of the present invention can be achieved with the following technical schemes.

A first type of fuel cell system, comprises a fuel cell stack (1), an air supply system connected to a cathode at a cathode side of the fuel cell stack, and a hydrogen supply system connected to an anode at an anode side of the fuel cell stack, wherein the air supply system includes an air compressor (2), an air inlet tube (3), and an air outlet tube (4), while the hydrogen supply system includes a hydrogen storage tank, a hydrogen inlet tube (5), and a hydrogen outlet tube, in which the air outlet tube (4) is connected to a low-oxygen gas storage tank (7) through a manifold (6), and the low-oxygen gas storage tank (7) is connected back to the hydrogen inlet tube (5) through a circulating tube (8), whereby during stop of the fuel cell, hydrogen remaining at the anode side of the fuel cell stack (1) consumes or dilutes oxygen in air at the cathode side, and a low-oxygen gas so generated is partially used to purge the fuel cell stack and partially stored in the low-oxygen gas storage tank (7) to be later used to purge the anode side of the fuel cell stack during start of the fuel cell system.

The air outlet tube (4) is provided with a solenoid valve b (11).

The manifold (6) is provided with a solenoid valve c (12).

The circulating tube (8) is provided with a solenoid valve d (13) and a check valve (14).

The hydrogen inlet tube (5) is provided with a solenoid valve e (15).

The hydrogen outlet tube is provided with a sensor for measuring a content of hydrogen.

The low-oxygen gas produced by the abovementioned fuel cell system is used to purge fluid channel at the anode side during stop of the fuel cell system to dilute and purge hydrogen from the fluid channel, so as to reduce the concentration of hydrogen to a level below an explosive limit, thereby preventing burning or explosions and increasing the safety factor, without using additional low-oxygen gas or other inert gases for purge. This not only saves energy but also improve the service life of the fuel cell. Meanwhile, the low-oxygen gas is used to purge the fluid channel at the anode side to expel H₂, so as to timely stop the electrochemical reaction in the cell stack and protect the cell stack. Furthermore, during start of the fuel cell system specific methods for diluting and purging the oxygen-containing gas from the anode of the fuel cell system including the following steps:
i) where there is a need of producing the low-oxygen gas or during stop of the fuel cell system, stopping the air compressor (2), closing the solenoid valve b (11), opening the solenoid valve c (12), the solenoid valve d (13) and the check valve (14), using hydrogen remaining or reserved according to needs at the anode side of the fuel cell stack (1) to continuously generate electric power, so as to consume oxygen in air at the cathode side and obtain the low-oxygen gas, storing the low-oxygen gas into the low-oxygen gas storage tank (7) through the manifold (6), and transferring the low-oxygen gas to the anode side of the fuel cell stack (1) through the circulating tube (8) to purge hydrogen remaining in a channel at the anode side so as to reduce a concentration of hydrogen to a level below 4%; and
ii) before start of the fuel cell system, first opening the solenoid valve d (13) and the check valve (14), using the low-oxygen gas stored in the low-oxygen gas storage tank (7) to fill and thereby purge the anode side of the fuel cell stack (1), so as to expel oxygen potentially remaining therein or to reduce a content of oxygen at the anode side to a level where filling of hydrogen is safe, and opening the solenoid valve e (15) to input hydrogen.

A second type of fuel cell system, comprises a fuel cell stack (1), an air supply system connected to a cathode at a cathode side of the fuel cell stack, and a hydrogen supply system connected to an anode at an anode side of the fuel cell stack, wherein the air supply system includes an air compressor (2), an air inlet tube (3), and an air outlet tube (4), while the hydrogen supply system includes a hydrogen storage tank, a hydrogen inlet tube (5) and a hydrogen outlet tube, in which the air outlet tube (4) is connected to a low-oxygen gas storage tank (7) through a manifold (6), and the low-oxygen gas storage tank (7) is connected back to the hydrogen inlet tube (5) through a circulating tube (8), while the air inlet tube (3) and the hydrogen inlet tube (5) are connected by a connecting tube (9) that is provided with a solenoid valve a (10), so that during stop of the fuel cell, redundant hydrogen at the anode side of the fuel cell stack (1) consumes oxygen in air remaining at the cathode side so as to produce a low-oxygen gas that expels hydrogen remaining at the anode side of the fuel cell stack, and then the air compressor supplies air to the anode side and the cathode side of the fuel cell stack, thereby expelling standing water from the fuel cell stack.

The air outlet tube (4) is provided with a solenoid valve b (11) and the manifold (6) is provided with a solenoid valve c (12) while the circulating tube (8) is provided with a solenoid valve d (13) and a check valve (14), in which the hydrogen inlet tube (5) is provided with a solenoid valve e (15) and the hydrogen outlet tube is provided with a sensor for measuring a content of hydrogen.

A method for purging and removing water using the second type of fuel cell system during stop and start process, which uses low-oxygen gas produced by the fuel cell system and air supplied by the air compressor to safely expel water standing in the fuel cell system during stop of the fuel cell system, the method comprises steps of:
i) where there is a need of producing low-oxygen gas or during stop of the fuel cell system, stopping the air compressor (2), closing the solenoid valve b (11), opening the solenoid valve c (12), the solenoid valve d (13) and the check valve (14), using hydrogen remaining or reserved according to needs at the anode side of the fuel cell stack (1) to continuously generate electric power, so as to consume oxygen in air at the cathode side and obtain the low-oxygen gas, storing the low-oxygen gas into the low-oxygen gas storage tank (7) through the manifold (6), and transferring the low-oxygen gas to the anode side of the fuel cell stack (1) through the circulating tube (8) to purge a channel at the anode side so as to reduce a concentration of hydrogen to a level below 4%; and
ii) closing the solenoid valve d (13), storing the remaining low-oxygen gas into the low-oxygen gas storage tank (7), opening the solenoid valve a (10) and the air compressor (2) to deliver high-pressure air to both the anode side and the cathode side of the fuel cell stack (1), so as to purge water standing in the fuel cell stack as a product of reaction.

With the foregoing fuel cell system, after the low-oxygen gas is used to expel hydrogen in the fluid channel at the anode side, the air compressor can continuously input air to the fluid channel at the anode side to expel water standing therein, so as to protect the cell stack. These may be achieved by a method comprising the following steps:
i) where there is a need of producing the low-oxygen gas or during stop of the fuel cell system, stopping the air compressor (2) or reducing a rotating speed of the air compressor and reducing air supply, closing the solenoid valve b (11), opening the solenoid valve c (12), the solenoid valve d (13) and the check valve (14), using hydrogen remaining or reserved according to needs at the anode side of the fuel cell stack (1) to continuously generate electric power, so as to consume oxygen in air at the cathode side and obtain the low-oxygen gas (generally with a content of oxygen of 15% or below), storing the low-oxygen gas into the low-oxygen gas storage tank (7) through the manifold (6), and transferring the low-oxygen gas to the anode side of the fuel cell stack (1) through the circulating tube (8) to purge a channel at the anode side so as to reduce a concentration of hydrogen to a level below 4%; and
ii) closing the solenoid valve d (13), storing the remaining low-oxygen gas into the low-oxygen gas storage tank (7), opening the solenoid valve a (10) and the air compressor (2) to deliver high-pressure high-flow air to both the anode side and the cathode side of the fuel cell stack (1), so as to effectively purge water standing in the fuel cell stack as a product of reaction.

As compared to the prior art, the present invention has the following benefits:
i) where there is a need of producing the low-oxygen gas or during stop of the fuel cell system, hydrogen remaining at the anode side of the fuel cell stack or reserved according to needs is used to continuously generate electric power, so as to consume oxygen in the air at the cathode side or reduce the concentration of oxygen, thereby obtaining the low-oxygen gas for the following uses:
   a. during stop of the system, purging the fluid channel at the anode side so as to dilute and expel hydrogen from the fluid channel and at least reduce the concentration of hydrogen to a level below the explosive limit, thereby preventing fire and explosions and increasing the safety factor, without using additional low-oxygen gas or other inert gases for purge with the attempts to save energy and improve the service life of the fuel cell;
   b. using the low-oxygen gas to purge the fluid channel at the anode side, so as to expel H₂, thereby stopping the electrochemical reaction in the cell stack timely and protecting the cell stack; and
   c. storing the produced low-oxygen gas so that during start the low-oxygen gas can be used to purge the anode side for expelling oxygen potentially remaining therein or reducing the content of oxygen at the anode side to a level where hydrogen can be filled in safely, and then inputting hydrogen, thereby improving safety and saving energy; and
ii) during stop of the system, the low-oxygen gas is used to dilute and expel hydrogen in the fluid channel at the anode side, and air compressor continuously supplies air to both the anode side and the cathode side of the fuel cell stack, thereby expelling standing water from the fuel cell stack and further protects the cell stack.

### BRIEF DESCRIPTION OF THE DRAWINGS

FIG. 1 is a schematic diagram illustrating a fuel cell system of the present invention purging and expelling hydrogen and air; and
FIG. 2 is a schematic diagram illustrating a fuel cell system of the present invention evacuating water.

### DETAILED DESCRIPTION OF THE INVENTION

The invention as well as a preferred mode of use, further objectives and advantages thereof will be best understood by reference to the following detailed description of illustrative embodiments when read in conjunction with the accompanying drawings.

### Embodiment 1

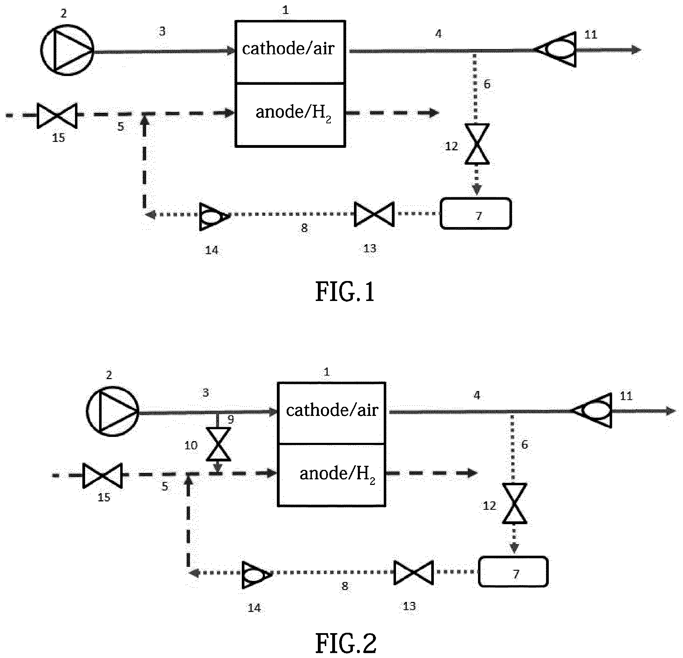

Referring to FIG. 1, a fuel cell system comprises a fuel cell stack 1, an air supply system connected to a cathode at a cathode side of the fuel cell stack, and a hydrogen supply system connected to an anode at an anode side of the fuel cell stack. The air supply system includes an air compressor 2, an air inlet tube 3, and an air outlet tube 4. The hydrogen supply system includes a hydrogen storage tank, a hydrogen inlet tube 5 and a hydrogen outlet tube. The air outlet tube 4 is connected to a low-oxygen gas storage tank 7 through a manifold 6, and the low-oxygen gas storage tank 7 is connected back to the hydrogen inlet tube 5 through a circulating tube 8. The air outlet tube 4 is provided with a solenoid valve b 11. The manifold 6 is provided with a solenoid valve c 12. The circulating tube 8 is provided with a solenoid valve d 13 and a check valve 14. The hydrogen inlet tube 5 is provided with a solenoid valve e 15. The hydrogen outlet tube is provided with a sensor for measuring a content of hydrogen.

The method for purging the foregoing fuel cell system during its stop and start process comprises the following steps:
where there is a need of producing the low-oxygen gas or during stop of the fuel cell system, closing the solenoid valve b 11, opening the solenoid valve c 12, the solenoid valve d 13 and the check valve 14, using hydrogen remaining or reserved according to needs at the anode side of the fuel cell stack 1 to continuously generate electric power, so as to consume oxygen in air at the cathode side and obtain the low-oxygen gas, storing the low-oxygen gas into the low-oxygen gas storage tank 7 through the manifold 6, and transferring the low-oxygen gas to the anode side of the fuel cell stack 1 through the circulating tube 8 to purge hydrogen remaining in a channel at the anode side so as to reduce a concentration of hydrogen to a level below 4%; and
ii. before start of the fuel cell system, first opening the solenoid valve d 13 and the check valve 14, using the low-oxygen gas stored in the low-oxygen gas storage tank 7 to fill and thereby purge the anode side of the fuel cell stack 1, so as to expel oxygen potentially remaining therein or to reduce a content of oxygen at the anode side to a level where filling of hydrogen is safe, and opening the solenoid valve e 15 to input hydrogen.

Since the oxidizing gas input at the cathode side of the fuel cell stack is air having a content of oxygen of 21%, and the fuel gas input at the anode side is high-purity hydrogen, during stop of the fuel cell system, a higher content of hydrogen remaining at the anode side and is sufficient to consume almost all the oxygen in the air at the cathode side. The resulting gas mainly containing low-oxygen gas and some rare gases can be partially used to purge hydrogen remaining in the cell stack and partially stored to be used later for purging oxygen at the anode side during start of the fuel cell system again.

### Embodiment 2

As illustrated in FIG. 2, a fuel cell system comprises a fuel cell stack 1, an air supply system connected to a cathode at a cathode side of the fuel cell stack, and a hydrogen supply system connected to an anode at an anode side of the fuel cell stack. The air supply system includes an air compressor 2, an air inlet tube 3, and an air outlet tube 4. The hydrogen supply system includes a hydrogen storage tank, a hydrogen inlet tube 5, and a hydrogen outlet tube. The air outlet tube 4 is connected to a low-oxygen gas storage tank 7 through a manifold 6, and the low-oxygen gas storage tank 7 is connected back to the hydrogen inlet tube 5 through a circulating tube 8. A connecting tube 9 is connected between the air inlet tube 3 and the hydrogen inlet tube 5. The connecting tube is provided with a solenoid valve a 10, and the air outlet tube 4 is provided with a solenoid valve b 11. The manifold 6 is provided with a solenoid valve c 12. The circulating tube 8 is provided with a solenoid valve d 13 and a check valve 14. The hydrogen inlet tube 5 is provided with a solenoid valve e 15. The hydrogen outlet tube is provided with a sensor for measuring a content of hydrogen.

The foregoing system serves to not only purge hydrogen and oxygen as described in Embodiment 1, but also safely expel standing water from the system when the system is stopped through the following steps:
where there is a need of producing the low-oxygen gas or during stop of the fuel cell system, stopping the air compressor 2 or reducing a rotating speed of the air compressor and reducing air supply, closing the solenoid valve b 11, opening the solenoid valve c 12, the solenoid valve d 13 and the check valve 14, using hydrogen remaining or reserved according to needs at the anode side of the fuel cell stack 1 to continuously generate electric power, so as to consume oxygen in air at the cathode side and obtain the low-oxygen gas (generally with a content of oxygen of 15% or below), storing the low-oxygen gas into the low-oxygen gas storage tank 7 through the manifold 6, and transferring the low-oxygen gas to the anode side of the fuel cell stack 1 through the circulating tube 8 to purge hydrogen remaining in a channel at the anode side so as to reduce a concentration of hydrogen to a level below 4%; and
ii. closing the solenoid valve d 13, storing the remaining low-oxygen gas into the low-oxygen gas storage tank 7, opening the solenoid valve a 10 and the air compressor 2 to deliver high-pressure high-flow air to both the anode side and the cathode side of the fuel cell stack 1, so as to effectively purge water standing in the fuel cell stack as a product of reaction.

## Claims

1. A fuel cell system, comprising a fuel cell stack (1), an air supply system connected to a cathode side of the fuel cell stack, and a hydrogen supply system connected to an anode side of the fuel cell stack, wherein the air supply system includes an air compressor (2), an air inlet tube (3), and an air outlet tube (4), while the hydrogen supply system includes a hydrogen storage tank, a hydrogen inlet tube (5), and a hydrogen outlet tube,
**characterized in that**
the air outlet tube (4) is connected to a low-oxygen, gas storage tank (7) through a manifold (6), and the low-oxygen gas storage tank (7) is connected back to the hydrogen inlet tube (5) through a circulating tube (8), whereby during stop of the fuel cell, hydrogen remaining at the anode side of the fuel cell stack (1) consumes or dilutes oxygen in air at the cathode side, and a low-oxygen gas so generated is partially used to purge the fuel cell stack and partially stored in the low-oxygen gas storage tank (7) to be later used to purge the anode side of the fuel cell stack during start of the fuel cell system.

2. The fuel cell system of claim 1, wherein the air outlet tube (4) is provided with a solenoid valve b (11).

3. The fuel cell system of claim 1, wherein the manifold (6) is provided with a solenoid valve c (12).

4. The fuel cell system of claim 1, wherein the circulating tube (8) is provided with a solenoid valve d (13) and a check valve (14).

5. The fuel cell system of claim 1, wherein the hydrogen inlet tube (5) is provided with a solenoid valve e (15).

6. The fuel cell system of claim 1, wherein the hydrogen outlet tube is provided with a sensor for measuring a content of hydrogen.

7. A method for purging the fuel cell system of any one of claims 1-6 during its stop and start process, **characterized in that**
the method uses the fuel cell system to produce low-oxygen gas, so that during stop of the fuel cell system, hydrogen remaining at the anode side of the fuel cell system is diluted and expelled, and during start of the fuel cell system, the low-oxygen gas at the anode side of the fuel cell system is diluted and expelled, the method comprises steps of:
i) where there is a need of producing the low-oxygen gas or during stop of the fuel cell system, stopping the air compressor (2), closing the solenoid valve b (11), opening the solenoid valve c (12), the solenoid valve d (13) and the check valve (14), using hydrogen remaining or reserved according to needs at the anode side of the fuel cell stack (1) to continuously generate electric power, so as to consume oxygen in air at the cathode side and obtain the low-oxygen gas, storing the low-oxygen gas into the low-oxygen gas storage tank (7) through the manifold (6), and transferring the low-oxygen gas to the anode side of the fuel cell stack (1) through the circulating tube (8) to purge hydrogen remaining in a channel at the anode side so as to reduce a concentration of hydrogen to a level below 4%; and
ii) before start of the fuel cell system, first opening the solenoid valve d (13) and the check valve (14), using the low-oxygen gas stored in the low-oxygen gas storage tank (7) to fill and thereby purge the anode side of the fuel cell stack (1), so as to expel oxygen potentially remaining therein or to reduce a content of oxygen at the anode side to a level where filling of hydrogen is safe, and opening the solenoid valve e (15) to input hydrogen.

8. A fuel cell system, comprising a fuel cell stack (1), an air supply system connected to a cathode at a cathode side of the fuel cell stack, and a hydrogen supply system connected to an anode at an anode side of the fuel cell stack, wherein the air supply system includes an air compressor (2), an air inlet tube (3), and an air outlet tube (4), while the hydrogen supply system includes a hydrogen storage tank, a hydrogen inlet tube (5) and a hydrogen outlet tube, in which the air outlet tube (4) is connected to a low-oxygen gas storage tank (7) through a manifold (6), and the low-oxygen gas storage tank (7) is connected back to the hydrogen inlet tube (5) through a circulating tube (8), while the air inlet tube (3) and the hydrogen inlet tube (5) are connected by a connecting tube (9) that is provided with a solenoid valve a (10), so that during stop of the fuel cell, redundant hydrogen at the anode side of the fuel cell stack (1) consumes oxygen in air remaining at the cathode side so as to produce a low-oxygen gas that expels hydrogen remaining at the anode side of the fuel cell stack, and then the air compressor supplies air to the anode side and the cathode side of the fuel cell stack, thereby expelling standing water from the fuel cell stack.

9. The fuel cell system of claim 8, wherein the air outlet tube (4) is provided with a solenoid valve b (11) and the manifold (6) is provided with a solenoid valve c (12) while the circulating tube (8) is provided with a solenoid valve d (13) and a check valve (14), in which the hydrogen inlet tube (5) is provided with a solenoid valve e (15) and the hydrogen outlet tube is provided with a sensor for measuring a content of hydrogen.

10. A method for purging and removing water for the fuel cell system of claim 8 or 9 during its stop and start, which uses low-oxygen gas produced by the fuel cell system and air supplied by the air compressor to safely expel water standing in the fuel cell system during stop of the fuel cell system, the method comprises steps of:
i) where there is a need of producing low-oxygen gas or during stop of the fuel cell system, stopping the air compressor (2) or reducing a rotating speed of the air compressor and reducing air supply, closing the solenoid valve b (11), opening the solenoid valve c (12), the solenoid valve d (13) and the check valve (14), using hydrogen remaining or reserved according to needs at the anode side of the fuel cell stack (1) to continuously generate electric power, so as to consume oxygen in air at the cathode side and obtain the low-oxygen gas (generally with a content of oxygen of 15% or below), storing the low-oxygen gas into the low-oxygen gas storage tank (7) through the manifold (6), and transferring the low-oxygen gas to the anode side of the fuel cell stack (1) through the circulating tube (8) to purge a channel at the anode side so as to reduce a concentration of hydrogen to a level below 4%; and
ii) closing the solenoid valve d (13), storing the remaining low-oxygen gas into the low-oxygen gas storage tank (7), opening the solenoid valve a (10) and the air compressor (2) to deliver high-pressure high-flow air to both the anode side and the cathode side of the fuel cell stack (1), so as to effectively purge water standing in the fuel cell stack as a product of reaction.
